# EUROPEAN PATENT APPLICATION

(11) **EP 4 807 874 A1**
(43) Date of publication of application: **16.09.2026**
(21) Application number: 24924479.9
(22) Date of filing: 17.10.2024
(51) Int. Cl.: H01M 50/244

(54) **BATTERY CELL, BATTERY, ELECTRIC DEVICE, AND ENERGY STORAGE APPARATUS**

(30) Priority: 18.02.2024 CN 202420292355 U
(71) Applicant: Contemporary Amperex Technology Co., Limited, Ningde, Fujian 352100 (CN)
(72) Inventor: SU, Huasheng, Ningde, Fujian 352100 (CN); CHEN, Xinxiang, Ningde, Fujian 352100 (CN); YANG, Xiao, Ningde, Fujian 352100 (CN); LIN, Denghua, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/125595
(87) International publication number: WO 2025/171717

(57) **Abstract**

A battery cell (20), a battery (100), an electric device, and an energy storage device. The battery cell (20) comprises a casing (21), and the casing (21) comprises a casing body (211). The casing body (211) comprises a first wall (24), a second wall (25), and a third wall (26); the first wall (24) and the second wall (25) are arranged opposite to each other in a first direction (X); the third wall (26) comprises a first sub-wall (261) and a second sub-wall (262) sequentially distributed in the first direction (X); the first sub-wall (261) and the second sub-wall (262) are respectively connected to the ends of the first wall (24) and the second wall (25) on the same side in a second direction (Y); and the first direction (X) is perpendicular to the second direction (Y). The first sub-wall (261) comprises a first thickened portion (261b), the second sub-wall (262) comprises a second thickened portion (262b), the thickness of the first thickened portion (261b) is greater than that of the first wall (24), the thickness of the second thickened portion (262b) is greater than that of the second wall (25), and the first thickened portion (261b) and the second thickened portion (262b) are welded. The reliability of the battery cell (20) can be improved.

## Description

### CROSS-REFERENCE TO RELATED APPLICATIONS

This application claims priority to Chinese patent application CN202420292355.1 entitled "BATTERY CELL, BATTERY, ELECTRIC DEVICE, AND ENERGY STORAGE APPARATUS", and filed on February 18, 2024, the entire contents of which are incorporated herein by reference.

### TECHNICAL FIELD

This application relates to the field of battery technology, and in particular, to a battery cell, a battery, an electric device, and an energy storage apparatus.

### BACKGROUND

Energy conservation and emission reduction are key to the sustainable development of the automobile industry. Electric vehicles have become an important component of the sustainable development of the automobile industry due to their advantages of energy conservation and environmental protection. For electric vehicles, battery technology is an important factor related to their development.

In the manufacturing process of batteries, the reliability of the battery is an issue that cannot be ignored. Therefore, how to improve the reliability of batteries is a technical problem that urgently needs to be solved in battery technology.

### SUMMARY

This application provides a battery cell, a battery, an electric device, and an energy storage apparatus, which can improve the reliability of the battery cell.

This application is achieved through the following technical solutions:
According to a first aspect, embodiments of this application provide a battery cell, where the battery cell includes a housing, and the housing includes a housing body. The housing body includes a first wall, a second wall, and a third wall, where the first wall and the second wall are oppositely arranged in a first direction, the third wall includes a first sub-wall and a second sub-wall sequentially distributed along the first direction, and the first sub-wall and the second sub-wall are respectively connected to same-side ends of the first wall and the second wall in a second direction, with the first direction being perpendicular to the second direction. The first sub-wall includes a first thickened portion, the second sub-wall includes a second thickened portion, a thickness of the first thickened portion is greater than a thickness of the first wall, a thickness of the second thickened portion is greater than a thickness of the second wall, and the first thickened portion and the second thickened portion are welded.

According to the battery cell of the embodiments of this application, the first sub-wall is connected to the first wall, and the thickness of the first thickened portion is greater than the thickness of the first wall, which is equivalent to thickening the first thickened portion relative to the first wall, so that the first sub-wall has higher strength. The second sub-wall is connected to the second wall, and the thickness of the second thickened portion is greater than the thickness of the second wall, which is equivalent to thickening the second thickened portion relative to the second wall, so that the second sub-wall has higher strength. This can reduce the risk of cracking in the region of the housing body near the welding position of the first sub-wall and the second sub-wall, so that the battery cell has longer service life and higher reliability.

According to some embodiments of this application, along the second direction, the first sub-wall and the second sub-wall do not overlap.

In the above solution, the first sub-wall and the second sub-wall do not overlap in the thickness direction of the third wall, so that the structure after the first sub-wall and the second sub-wall are connected occupies less space in the thickness direction of the third wall, reducing the risk of interference between the housing body and other components.

According to some embodiments of this application, the first sub-wall further includes a first body portion, the first body portion and the first thickened portion are connected to each other, the first body portion and the first thickened portion are sequentially distributed along the first direction, the first body portion is connected to the first wall, a thickness of the first body portion is greater than or equal to the thickness of the first wall, and the thickness of the first thickened portion is greater than the thickness of the first body portion; the second sub-wall further includes a second body portion, the second body portion and the second thickened portion are connected to each other, the second body portion and the second thickened portion are sequentially distributed along the first direction, the second body portion is connected to the second wall, a thickness of the second body portion is greater than or equal to the thickness of the second wall, and the thickness of the second thickened portion is greater than the thickness of the second body portion.

In the above solution, the thickness of the first body portion is not less than the thickness of the first wall, and the thickness of the first thickened portion is greater than the thickness of the first body portion, so that the first thickened portion is thickened, which can enhance the strength of the first thickened portion, while the thickness of the second body portion is not less than the thickness of the second wall, and the thickness of the second thickened portion is greater than the thickness of the second body portion, so that the second thickened portion is thickened, which can enhance the strength of the second thickened portion, so as to facilitate higher strength after the first thickened portion and the second thickened portion are welded.

According to some embodiments of this application, along a third direction, a thickness at any position of the first thickened portion is greater than the thickness of the first body portion, a thickness at any position of the second thickened portion is greater than the thickness of the second body portion, and the first direction, the second direction, and the third direction are perpendicular to each other.

In the above solution, the thickness at any position of the first thickened portion in the third direction is larger, so that the first thickened portion has higher strength, while the thickness at any position of the second thickened portion in the third direction is larger, so that the second thickened portion has higher strength, thereby making the housing body have higher strength in the region near the welding position of the first sub-wall and the second sub-wall.

According to some embodiments of this application, there are multiple first thickened portions, and along the third direction, the multiple first thickened portions are spaced apart; there are multiple second thickened portions, and along the third direction, the multiple second thickened portions are spaced apart.

In the above solution, the multiple first thickened portions are spaced apart along the third direction, so that while enhancing the strength of the first thickened portion, the third wall is lighter in weight, is made of less material, and has lower cost. The multiple second thickened portions are spaced apart along the third direction, so that while enhancing the strength of the second thickened portion, the third wall is lighter in weight, is made of less material, and has lower cost.

According to some embodiments of this application, along the third direction, the first thickened portion extends from one end of the first sub-wall to the other end, and the second thickened portion extends from one end of the second sub-wall to the other end.

In the above solution, the first thickened portion is entirely thickened in the third direction of the first sub-wall, and the second thickened portion is entirely thickened in the third direction of the second sub-wall, so that the region near the welding position of the first sub-wall and the second sub-wall has higher strength, reducing the risk of cracking near the welding position of the first sub-wall and the second sub-wall.

According to some embodiments of this application, along the first direction, a dimension of the first thickened portion is greater than 0, and the dimension of the first thickened portion is less than or equal to 0.25 times a dimension of the third wall; and/or along the first direction, a dimension of the second thickened portion is greater than 0, and the dimension of the second thickened portion is less than or equal to 0.25 times the dimension of the third wall.

In the above solution, the dimension of the first thickened portion in the first direction satisfies the above relationship. When the dimension of the first thickened portion is greater than 0, the strength of the region near the welding position of the first sub-wall and the second sub-wall can be enhanced. When the dimension of the first thickened portion is less than or equal to 0.25 times the dimension of the third wall, the first sub-wall is lighter in weight, is made of less material, and has lower cost. The dimension of the second thickened portion in the first direction satisfies the above relationship. When the dimension of the second thickened portion is greater than 0, the strength of the region near the welding position of the second sub-wall and the first sub-wall can be enhanced. When the dimension of the second thickened portion is less than or equal to 0.25 times the dimension of the third wall, the second sub-wall is lighter in weight, is made of less material, and has lower cost.

According to some embodiments of this application, a thickness direction of the first thickened portion is parallel to a thickness direction of the first sub-wall, a difference between a maximum thickness of the first thickened portion and the thickness of the first body portion is greater than or equal to 0.05 mm, and the difference between the maximum thickness of the first thickened portion and the thickness of the first body portion is less than or equal to the thickness of the first body portion; and/or, a thickness direction of the second thickened portion is parallel to a thickness direction of the second sub-wall, a difference between a maximum thickness of the second thickened portion and the thickness of the second body portion is greater than or equal to 0.05 mm, and the difference between the maximum thickness of the second thickened portion and the thickness of the second body portion is less than or equal to the thickness of the second body portion.

In the above solution, the difference between the maximum thickness of the first thickened portion and the thickness of the first body portion satisfies the above relationship. When the difference between the maximum thickness of the first thickened portion and the thickness of the first body portion is greater than or equal to 0.05 mm, the first thickened portion has stronger strength. When the difference between the maximum thickness of the first thickened portion and the thickness of the first body portion is less than or equal to the thickness of the first body portion, the first sub-wall is lighter in weight and made of less material, and the first thickened portion occupies less space in the thickness direction of the third wall. The difference between the maximum thickness of the second thickened portion and the thickness of the second body portion satisfies the above relationship. When the difference between the maximum thickness of the second thickened portion and the thickness of the second body portion is greater than or equal to 0.05 mm, the second thickened portion has stronger strength. When the difference between the maximum thickness of the second thickened portion and the thickness of the second body portion is less than or equal to the thickness of the second body portion, the second sub-wall is lighter in weight and made of less material, and the second thickened portion occupies less space in the thickness direction of the third wall.

According to some embodiments of this application, the maximum thickness of the first thickened portion is greater than or equal to 0.25 mm, and the maximum thickness of the first thickened portion is less than or equal to 2.4 mm; and/or, the maximum thickness of the second thickened portion is greater than or equal to 0.25 mm, and the maximum thickness of the second thickened portion is less than or equal to 2.4 mm.

In the above solution, the maximum thickness of the first thickened portion satisfies the above relationship. When the maximum thickness of the first thickened portion is greater than or equal to 0.25 mm, the first thickened portion has higher strength. When the maximum thickness of the first thickened portion is less than or equal to 2.4 mm, the first thickened portion occupies less space in the thickness direction of the third wall, reducing the risk of interference between the first thickened portion and other components. The maximum thickness of the second thickened portion satisfies the above relationship. When the maximum thickness of the second thickened portion is greater than or equal to 0.25 mm, the second thickened portion has higher strength. When the maximum thickness of the second thickened portion is less than or equal to 2.4 mm, the second thickened portion occupies less space in the thickness direction of the third wall, reducing the risk of interference between the second thickened portion and other components.

According to some embodiments of this application, the housing body further includes a fourth wall, the third wall and the fourth wall are oppositely arranged in the second direction, two ends of the fourth wall are respectively connected to the first wall and the second wall, and the first sub-wall, the first wall, the fourth wall, the second wall, and the second sub-wall are integrally formed.

In the above solution, the fourth wall and the third wall are oppositely arranged in the second direction, and the first wall, the fourth wall, the second wall, and the third wall enclose an accommodating cavity to accommodate an electrode assembly; the first sub-wall, the first wall, the fourth wall, the second wall, and the second sub-wall are integrally formed, so that the overall strength of the housing body is higher, and the processing and manufacturing difficulty is lower.

According to some embodiments of this application, an area of an outer surface of the first wall is greater than an area of an outer surface of the third wall and greater than an area of an outer surface of the fourth wall, and an area of an outer surface of the second wall is greater than the area of the outer surface of the third wall and greater than the area of the outer surface of the fourth wall.

In the above solution, the first wall and the second wall can be larger faces of the housing body, and the first wall and the second wall can be of an integral structure, so that the overall strength of the first wall and the overall strength of the second wall are both higher, and the third wall can be a narrower face of the housing body, facilitating the connection of the first sub-wall and the second sub-wall.

According to some embodiments of this application, the housing body has two openings opposite along the third direction, the housing further includes two end covers, the two end covers respectively close the two openings, and the third direction, the second direction, and the first direction are perpendicular to each other.

In the above solution, the two openings are provided to facilitate the assembly of the electrode assembly with the housing body, and at the same time, a positive electrode tab and a negative electrode tab of the electrode assembly can extend from both ends in the third direction, facilitating the output or input of electrical energy from both ends of the battery cell in the third direction.

According to a second aspect, embodiments of this application further provide a battery, which includes the battery cell provided in any of the above embodiments.

According to a third aspect, embodiments of this application further provide an electric device, which includes the battery cell or the battery provided in any of the above embodiments.

According to a fourth aspect, embodiments of this application further provide an energy storage apparatus, which includes the battery cell or the battery provided in any of the above embodiments.

Additional aspects and advantages of this application will be partly given in the following description, partly will become apparent from the following description, or will be learned through practice of this application.

### BRIEF DESCRIPTION OF THE DRAWINGS

In order to more clearly illustrate the technical solutions of the embodiments of this application, the drawings required in the embodiments will be briefly introduced below. It should be understood that the following drawings only show some embodiments of this application and therefore should not be regarded as limiting the scope. For those of ordinary skill in the art, other related drawings can also be obtained based on these drawings without creative efforts.
FIG. 1 is a schematic structural diagram of a vehicle according to some embodiments of this application;
FIG. 2 is an exploded schematic diagram of a battery according to some embodiments of this application;
FIG. 3 is an exploded schematic diagram of a battery cell according to some embodiments of this application;
FIG. 4 is a schematic structural diagram of a housing body according to some embodiments of this application;
FIG. 5 is a schematic structural diagram of a first wall according to some embodiments of this application;
FIG. 6 is a partial enlarged view of position A in FIG. 5;
FIG. 7 is a schematic structural diagram of a first sub-wall and a second sub-wall according to some embodiments of this application; and
FIG. 8 is a schematic structural diagram of multiple first thickened portions and multiple second thickened portions according to some embodiments of this application.

In the drawings, the drawings are not drawn to actual scale.

Description of reference numerals: 100. battery; 10. box body; 11. first sub-box body; 12. second sub-box body; 20. battery cell; 21. housing; 211. housing body; 212. end cover; 22. electrode assembly; 23. electrode terminal; 24. first wall; 25. second wall; 26. third wall; 261. first sub-wall; 261a. first body portion; 261b. first thickened portion; 261c. first transition portion; 262. second sub-wall; 262a. second body portion; 262b. second thickened portion; 262c. second transition portion; 27. fourth wall; 200. controller; 300. motor; 1000. vehicle; X. first direction; Y. second direction; and Z. third direction.

### DESCRIPTION OF EMBODIMENTS

In order to make the purposes, technical solutions, and advantages of the embodiments of this application clearer, the technical solutions in the embodiments of this application will be clearly and completely described below in conjunction with the drawings in the embodiments of this application. Obviously, the described embodiments are some embodiments of this application, rather than all embodiments. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those skilled in the technical field to which this application belongs; the terms used in the specification of this application are only for the purpose of describing specific embodiments and are not intended to limit this application; the terms "include" and "comprise" in the specification and claims of this application and the description of the above drawings, as well as any variations thereof, are intended to cover non-exclusive inclusion. The terms "first", "second", and the like in the specification and claims of this application or the above drawings are used to distinguish different objects, rather than to describe a specific order or primary-secondary relationship.

The mention of "embodiment" in this application means that a specific feature, structure, or characteristic described in conjunction with the embodiment may be included in at least one embodiment of this application. The appearance of the phrase in various places in the specification does not necessarily refer to the same embodiment, nor is it an independent or alternative embodiment that is mutually exclusive with other embodiments. Those skilled in the art explicitly and implicitly understand that the embodiments described in this application may be combined with other embodiments.

In the description of this application, it should be noted that, unless otherwise clearly specified and limited, the terms "mounting", "connection", "join", and "attaching" should be understood in a broad sense, for example, they can be a fixed connection, a detachable connection, or an integral connection; or they can be a direct connection, an indirect connection through an intermediate medium, or an internal communication between two elements. For those of ordinary skill in the art, the specific meanings of the above terms in this application can be understood according to specific situations.

The term "and/or" in this application is merely a description of an association relationship of associated objects, indicating that three relationships may exist, for example, A and/or B may indicate the following three cases: A exists alone, A and B exist simultaneously, and B exists alone. In addition, the character "/" in this application generally indicates that the contextually associated objects are in an "or" relationship.

The "multiple" appearing in this application refers to two or more (including two), similarly, "multiple groups" refers to two or more groups (including two groups), and "multiple pieces" refers to two or more pieces (including two pieces).

In some embodiments, the battery may be a battery module, and when there are multiple battery cells, the multiple battery cells are arranged and fixed to form a battery module.

In some embodiments, the battery may be a battery pack, the battery pack includes a box body and battery cells, and the battery cells or battery modules are accommodated in the box body.

In some embodiments, the box body may serve as a part of a chassis structure of a vehicle. For example, a part of the box body may become at least a part of a floor of the vehicle, or a part of the box body may become at least a part of a cross beam and a longitudinal beam of the vehicle.

In some embodiments, the battery may be an energy storage apparatus. The energy storage apparatus includes an energy storage container, an energy storage electric cabinet, or the like.

In the embodiments of this application, the battery cell may be a secondary battery, and the secondary battery refers to a battery cell that can continue to be used by activating active materials through charging after the battery cell is discharged.

The battery cell may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead-acid battery.

The battery cell generally includes an electrode assembly. The electrode assembly includes a positive electrode, a negative electrode, and a separator. During the charging and discharging process of the battery cell, active ions (for example, lithium ions) intercalate and deintercalate back and forth between the positive electrode and the negative electrode. The separator is disposed between the positive electrode and the negative electrode, which can prevent short circuit between the positive and negative electrodes while allowing active ions to pass through.

In some embodiments, the positive electrode may be a positive electrode sheet, and the positive electrode sheet may include a positive electrode current collector and a positive electrode active material disposed on at least one surface of the positive electrode current collector.

As an example, the positive electrode current collector has two surfaces opposite in its own thickness direction, and the positive electrode active material is disposed on either or both of the two opposite surfaces of the positive electrode current collector.

As an example, the positive electrode current collector may use a metal foil or a composite current collector. For example, as a metal foil, aluminum with silver-plated surface, stainless steel with silver-plated surface, stainless steel, copper, aluminum, nickel, carbon electrode, carbon, nickel, or titanium may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. However, this application is not limited to these materials, and other conventional materials that can be used as battery positive electrode active materials may also be used.

In some embodiments, the negative electrode may be a negative electrode sheet, and the negative electrode sheet may include a negative electrode current collector.

As an example, the negative electrode current collector may use a metal foil or a composite current collector. For example, as a metal foil, aluminum with silver-plated surface, stainless steel with silver-plated surface, stainless steel, copper, aluminum, nickel, carbon electrode, carbon, nickel, or titanium may be used.

In some embodiments, the negative electrode current collector has two surfaces opposite in its own thickness direction, and the negative electrode active material is disposed on either or both of the two opposite surfaces of the negative electrode current collector.

As an example, the negative electrode active material may use negative electrode active materials known in the art for batteries. As an example, the negative electrode active material may include at least one of the following materials: artificial graphite, natural graphite, soft carbon, hard carbon, silicon-based material, tin-based material, lithium titanate, or the like. The silicon-based material may be selected from at least one of elemental silicon, silicon oxide compound, silicon-carbon composite, silicon-nitrogen composite, and silicon alloy. The tin-based material may be selected from at least one of elemental tin, tin oxide compound, and tin alloy. However, this application is not limited to these materials, and other conventional materials that can be used as battery negative electrode active materials may also be used. These negative electrode active materials may be used alone, or two or more of them are used in combination.

In some embodiments, the separator is a separating film. This application has no particular restriction on the type of the separating film, and any well-known porous structure separating film with good chemical stability and mechanical stability may be selected.

As an example, the main material of the separating film may be selected from at least one of glass fiber, nonwoven fabric, polyethylene, polypropylene, and polyvinylidene fluoride, and ceramics. The separating film may be a single-layer film or a multi-layer composite film, without particular restriction. When the separating film is a multi-layer composite film, the materials of the layers may be the same or different, without particular restriction. The separator may be a separate component located between the positive and negative electrodes, or may be attached to the surfaces of the positive and negative electrodes.

In some embodiments, the separator is a solid electrolyte. The solid electrolyte is disposed between the positive electrode and the negative electrode, and simultaneously plays the role of transmitting ions and separating the positive and negative electrodes.

In some embodiments, the electrode assembly is a wound structure. The positive electrode sheet and the negative electrode sheet are wound into a wound structure.

In some embodiments, the electrode assembly is a laminated structure.

In some embodiments, the battery cell may include a housing. The housing is used to encapsulate components such as the electrode assembly and electrolyte. The housing may be a steel housing, an aluminum housing, a composite metal housing, or the like.

In some embodiments, the housing includes an end cover and a housing body, the housing body is provided with an opening, and the end cover closes the opening to form a sealed space for accommodating the electrode assembly, the electrolyte, and other substances. The housing body may be provided with one or more openings. One or more end covers may also be provided.

In some embodiments, at least one electrode terminal is provided on the housing, and the electrode terminal is electrically connected to a tab of the electrode assembly. The electrode terminal may be directly connected to the tab or indirectly connected to the tab through an adapter. The electrode terminal may be provided on the end cover or on the housing body.

In some embodiments, an explosion-proof valve is provided on the housing. The explosion-proof valve is used to release the internal pressure of the battery cell.

As an example, the battery cell may be a prismatic battery cell or a battery of other shapes. The prismatic battery cell includes a square shell battery cell, a blade-shaped battery cell, or a polyprismatic battery. The polyprismatic battery is, for example, a hexagonal prismatic battery.

For the development of battery technology, multiple design factors must be considered simultaneously, such as energy density, discharge capacity, charge-discharge rate, and other performance parameters. In addition, the reliability of the battery also needs to be considered.

In some embodiments, the battery cell includes a housing and an electrode assembly, and the electrode assembly is disposed in the housing. The housing includes a housing body, and the housing body is usually integrally formed by welding two disconnected parts to enclose a space for accommodating the electrode assembly. During welding of the housing body, due to the relatively high temperature generated by welding, a heat-affected zone is formed near the welding position, and the strength of the housing body in the heat-affected zone is relatively low. During the charging and discharging process of the battery cell, or when the gas production of the electrode assembly is relatively significant, or when the battery cell undergoes thermal runaway, the housing body is stressed and swells, and the region of the housing body near the welding position is prone to cracking, leading to damage to the housing body, thereby resulting in shorter service life and lower reliability of the battery cell.

In view of this, the embodiments of this application provide a technical solution in which the battery cell includes a housing, the housing includes a housing body, the housing body includes a first wall, a second wall, and a third wall, the third wall includes a first sub-wall and a second sub-wall sequentially distributed along a first direction, and the first sub-wall and the second sub-wall are respectively connected to same-side ends of the first wall and the second wall in a second direction. The first sub-wall includes a first thickened portion, the second sub-wall includes a second thickened portion, a thickness of the first thickened portion is greater than a thickness of the first wall, a thickness of the second thickened portion is greater than a thickness of the second wall, and the first thickened portion and the second thickened portion are welded. This can reduce the risk of cracking in the region of the housing body near the welding position of the first sub-wall and the second sub-wall, so that the battery cell has longer service life and higher reliability.

In such a battery cell, one end of the first sub-wall is connected to the first wall, the thickness of the first thickened portion is greater than the thickness of the first wall, and the first thickened portion is thickened relative to the first wall, so that the first sub-wall has higher strength. One end of the second sub-wall is connected to the second wall, the thickness of the second thickened portion is greater than the thickness of the second wall, and the second thickened portion is thickened relative to the second wall, so that the second sub-wall has higher strength. The region of the housing body near the welding position of the first sub-wall and the second sub-wall has higher strength, which can reduce the risk of cracking in the region of the housing body near the welding position of the first sub-wall and the second sub-wall, improving the service life and reliability of the battery cell.

The battery cell or battery disclosed in the embodiments of this application may be used in, but is not limited to, electric devices such as vehicles, ships, or aircraft. The power system of the electric device may be composed using the battery cell or battery disclosed in this application.

The embodiments of this application provide an electric device using a battery as a power source, and the electric device may be, but is not limited to, a mobile phone, a tablet computer, a laptop computer, an electric toy, an electric tool, an electric bicycle, an electric motorcycle, an electric vehicle, a ship, and a spacecraft. The electric toy may include a fixed or mobile electric toy, such as a game console, an electric car toy, an electric ship toy, or an electric airplane toy, and the spacecraft may include an airplane, a rocket, a space shuttle, or a spaceship.

For convenience of description, an example in which an electric device according to one embodiment of this application is a vehicle 1000 is used for description.

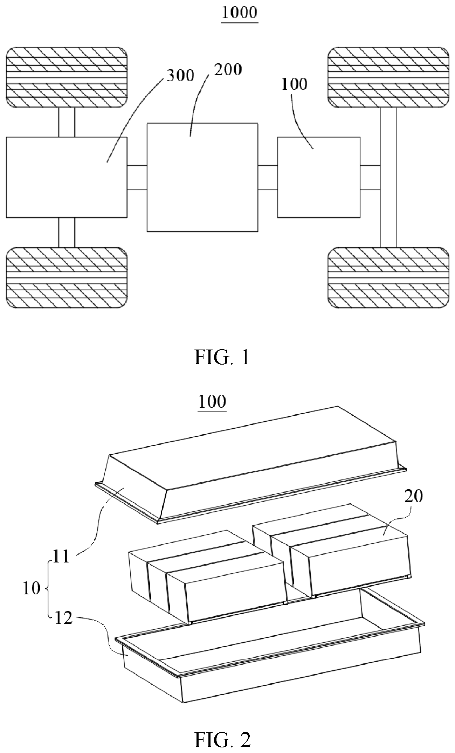

Referring to FIG. 1, FIG. 1 is a schematic structural diagram of a vehicle according to some embodiments of this application. The vehicle 1000 may be a fuel vehicle, a gas vehicle, or a new energy vehicle, and the new energy vehicle may be a pure electric vehicle, a hybrid electric vehicle, an extended-range vehicle, or the like. A battery 100 is provided inside the vehicle 1000, and the battery 100 may be provided at the bottom, head, or tail of the vehicle 1000. The battery 100 may be used for power supply of the vehicle 1000. For example, the battery 100 may serve as an operating power source of the vehicle 1000, for a circuit system of the vehicle 1000, for example, for starting, navigation, and operating power requirements of the vehicle 1000.

The vehicle 1000 may further include a controller 200 and a motor 300, and the controller 200 is used to control the battery 100 to supply power to the motor 300, for example, for starting, navigation, and operating power requirements during driving of the vehicle 1000.

In some embodiments of this application, the battery 100 can not only serve as an operating power source of the vehicle 1000, but also serve as a driving power source of the vehicle 1000, replacing or partially replacing fuel or natural gas to provide driving power for the vehicle 1000.

Referring to FIG. 2, FIG. 2 is an exploded schematic diagram of a battery according to some embodiments of this application. The battery 100 includes a box body 10 and battery cells 20, and the battery cells 20 are accommodated in the box body 10. The box body 10 is used to provide an accommodating space for the battery cells 20, and the box body 10 may adopt various structures. In some embodiments, the box body 10 may include a first sub-box body 11 and a second sub-box body 12, the first sub-box body 11 and the second sub-box body 12 cover each other, and the first sub-box body 11 and the second sub-box body 12 jointly define an accommodating space for accommodating the battery cells 20. The second sub-box body 12 may be a hollow structure with one end open, the first sub-box body 11 may be a plate-shaped structure, and the first sub-box body 11 covers the open side of the second sub-box body 12, so that the first sub-box body 11 and the second sub-box body 12 jointly define the accommodating space. The first sub-box body 11 and the second sub-box body 12 may also both be hollow structures with one side open, and the open side of the first sub-box body 11 covers the open side of the second sub-box body 12.

In the battery 100, there may be multiple battery cells 20, and the multiple battery cells 20 may be connected in series, in parallel, or in series-parallel, where the series-parallel connection includes both a series connection and a parallel connection of the multiple battery cells 20. The multiple battery cells 20 may be directly connected in series, in parallel, or in series-parallel, and then the entirety formed by the multiple battery cells 20 is accommodated in the box body 10. Certainly, the battery 100 may also be in a form where multiple battery cells 20 are first connected in series, in parallel, or in series-parallel to form battery modules, and then multiple battery modules are connected in series, in parallel, or in series-parallel to form an entirety that is accommodated in the box body 10. The battery 100 may further include other structures, for example, the battery 100 may further include a bus component for achieving electrical connection between the multiple battery cells 20.

Each battery cell 20 may be a secondary battery or a primary battery; the battery cell 20 may also be a lithium-sulfur battery, a sodium-ion battery, or a magnesium-ion battery, but is not limited thereto.

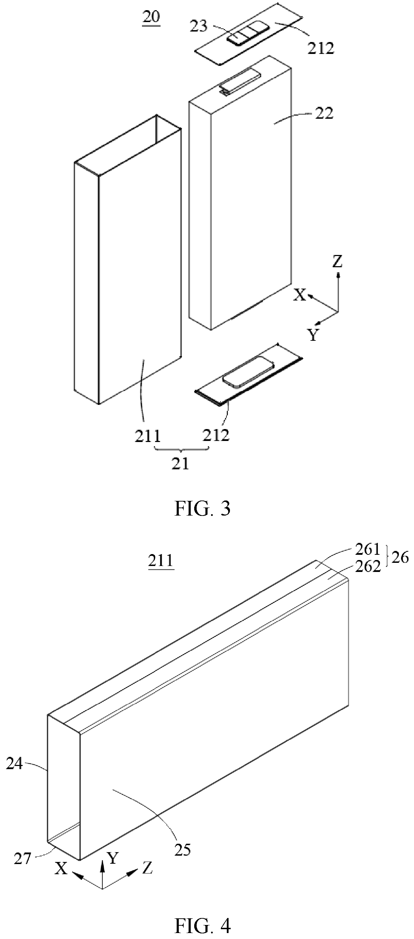

Referring to FIG. 3, FIG. 3 is an exploded schematic diagram of a battery cell according to some embodiments of this application. As shown in FIG. 3, the battery cell 20 includes a housing 21, an electrode assembly 22, and other functional components. The housing 21 includes a housing body 211 and an end cover 212, the housing body 211 has an opening, and the end cover 212 closes the opening to isolate the internal environment of the battery cell 20 from the external environment.

The housing body 211 is a component used to cooperate with the end cover 212 to form the internal environment of the battery cell 20, where the formed internal environment can be used to accommodate the electrode assembly 22, electrolyte, and other components. The housing body 211 and the end cover 212 may be independent components. The housing body 211 may be of various shapes and various sizes. Specifically, the shape of the housing body 211 may be determined according to the specific shape and size of the electrode assembly 22. The material of the housing body 211 may be various, such as copper, iron, aluminum, stainless steel, or aluminum alloy.

The end cover 212 refers to a component that covers the opening of the housing body 211 to isolate the internal environment of the battery cell 20 from the external environment. Without limitation, the shape of the end cover 212 may be adapted to the shape of the housing body 211 to fit the housing body 211. Optionally, the end cover 212 may be made of a material (such as aluminum alloy) with certain hardness and strength, so that the end cover 212 is not prone to deformation when subjected to extrusion and collision, the battery cell 20 can have higher structural strength, and reliability can also be improved. Functional components such as the electrode terminal 23 may be provided on the end cover 212. The electrode terminal may be used to electrically connect with the electrode assembly 22 for outputting or inputting electrical energy of the battery cell 20. The material of the end cover 212 may also be various, such as copper, iron, aluminum, stainless steel, or aluminum alloy, and the embodiments of this application do not impose special restrictions thereon. In some embodiments, an insulating structure may also be provided on the inner side of the end cover 212, and the insulating structure can be used to isolate electrical connection components in the housing body 211 from the end cover 212 to reduce the risk of short circuit. Exemplarily, the insulating structure may be plastic, rubber, or the like.

The electrode assembly 22 is a component subjected to electrochemical reactions in the battery cell 20. The housing body 211 may contain one or more electrode assemblies 22. The electrode assembly 22 is mainly formed by winding or stacking a positive electrode sheet and a negative electrode sheet, usually a separating film is provided between the positive electrode sheet and the negative electrode sheet, and the separating film is used to separate the positive electrode sheet and the negative electrode sheet to avoid internal short circuit between the positive electrode sheet and the negative electrode sheet. The parts of the positive electrode sheet and the negative electrode sheet with active substances constitute a main body portion of the electrode assembly, and the parts of the positive electrode sheet and the negative electrode sheet without active substances respectively constitute tabs. The positive electrode tab and the negative electrode tab may be jointly located at one end of the main body portion or respectively located at both ends of the main body portion.

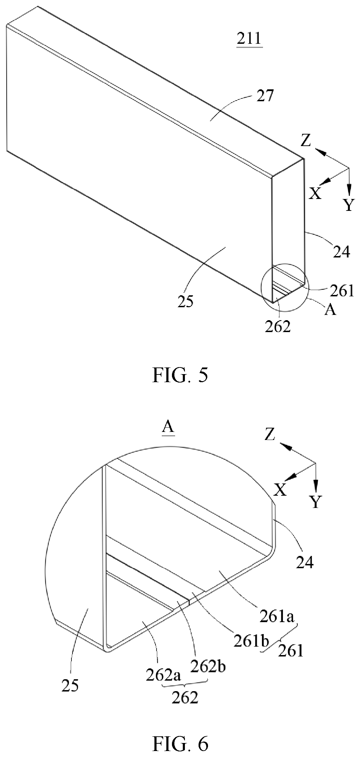

Referring to FIG. 3 and FIG. 4, FIG. 4 is a schematic structural diagram of a housing body according to some embodiments of this application, FIG. 5 is a schematic structural diagram of a first wall according to some embodiments of this application, and FIG. 6 is a partial enlarged view of position A in FIG. 5.

According to some embodiments of this application, the embodiments of this application provide a battery cell 20, where the battery cell 20 includes a housing 21, and the housing 21 includes a housing body 211. The housing body 211 includes a first wall 24, a second wall 25, and a third wall 26, the first wall 24 and the second wall 25 are oppositely arranged in a first direction X, the third wall 26 includes a first sub-wall 261 and a second sub-wall 262 sequentially distributed along the first direction X, and the first sub-wall 261 and the second sub-wall 262 are respectively connected to the same-side ends of the first wall 24 and the second wall 25 in a second direction Y, with the first direction X being perpendicular to the second direction Y. The first sub-wall 261 includes a first thickened portion 261b, the second sub-wall 262 includes a second thickened portion 262b, a thickness of the first thickened portion 261b is greater than a thickness of the first wall 24, a thickness of the second thickened portion 262b is greater than a thickness of the second wall 25, and the first thickened portion 261b and the second thickened portion 262b are welded.

The first wall 24 and the second wall 25 are oppositely arranged in the first direction X, and when viewed along the first direction X, the first wall 24 and the second wall 25 completely overlap. The thickness of the first wall 24 and the thickness of the second wall 25 may be the same or different. Optionally, the thickness of the first wall 24 is the same as the thickness of the second wall 25, facilitating processing and manufacturing.

The third wall 26 is located between the first wall 24 and the second wall 25, and along the second direction Y, the third wall 26 is located at the same end of the first wall 24 and the second wall 25. The second direction Y is parallel to the thickness direction of the third wall 26.

The first sub-wall 261 and the second sub-wall 262 are sequentially distributed in the first direction X, along the first direction X, one end of the first sub-wall 261 is connected to the first wall 24, one end of the second sub-wall 262 is connected to the second wall 25, and the other end of the first sub-wall 261 is welded to the other end of the second sub-wall 262.

In some embodiments, the first thickened portion 261b may be provided only at one end of the first sub-wall 261 close to the second sub-wall 262, meaning that a part of the thickness of the first sub-wall 261 may be greater than the thickness of the first wall 24; the second thickened portion 262b may be provided only at one end of the second sub-wall 262 close to the first sub-wall 261, meaning that a part of the thickness of the second sub-wall 262 may be greater than the thickness of the second wall 25. Alternatively, the first thickened portion 261b constitutes the entire first sub-wall 261, meaning that the thickness at any position of the first sub-wall 261 is greater than the thickness of the first wall 24; the second thickened portion 262b constitutes the entire second sub-wall 262, meaning that the thickness at any position of the second sub-wall 262 is greater than the thickness of the second wall 25.

According to the battery cell 20 of the embodiments of this application, the first sub-wall 261 is connected to the first wall 24, and the thickness of the first thickened portion 261b is greater than the thickness of the first wall 24, which is equivalent to thickening the first thickened portion 261b relative to the first wall 24, so that the first sub-wall 261 has higher strength; the second sub-wall 262 is connected to the second wall 25, and the thickness of the second thickened portion 262b is greater than the thickness of the second wall 25, which is equivalent to thickening the second thickened portion 262b relative to the second wall 25, so that the second sub-wall 262 has higher strength. This can reduce the risk of cracking in the region of the housing body 211 near the welding position of the first sub-wall 261 and the second sub-wall 262, so that the battery cell 20 has longer service life and higher reliability.

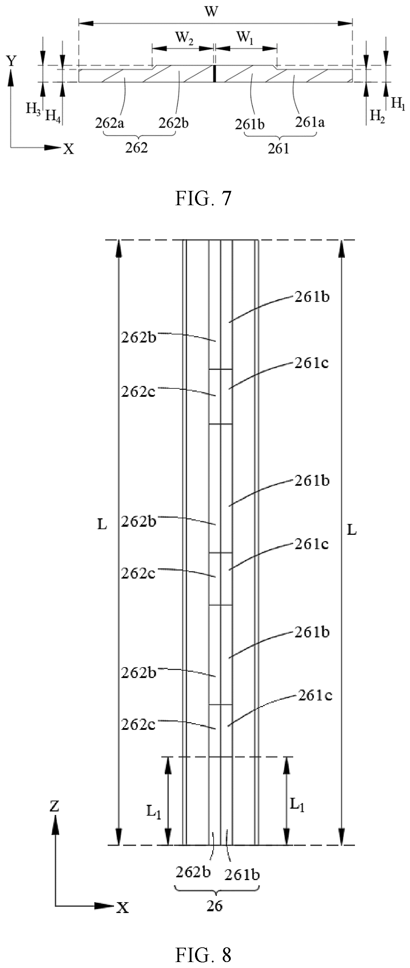

Referring to FIG. 7, FIG. 7 is a schematic structural diagram of a first sub-wall and a second sub-wall according to some embodiments of this application. According to some embodiments of this application, along the second direction Y, the first sub-wall 261 and the second sub-wall 262 do not overlap.

Since the second direction Y is parallel to the thickness direction of the third wall 26, the first sub-wall 261 and the second sub-wall 262 do not overlap in the thickness direction of the third wall 26, meaning that the first sub-wall 261 and the second sub-wall 262 have no overlapping part, and after the first sub-wall 261 and the second sub-wall 262 are welded, the connection position of the first sub-wall 261 and the second sub-wall 262 occupies less space in the thickness direction of the third wall 26, reducing the risk of interference between the housing body 211 and other components.

According to some embodiments of this application, the first sub-wall 261 further includes a first body portion 261a, the first body portion 261a and the first thickened portion 261b are connected to each other, the first body portion 261a and the first thickened portion 261b are sequentially distributed along the first direction X, the first body portion 261a is connected to the first wall 24, a thickness of the first body portion 261a is greater than or equal to the thickness of the first wall 24, and the thickness of the first thickened portion 261b is greater than the thickness of the first body portion 261a; the second sub-wall 262 further includes a second body portion 262a, the second body portion 262a and the second thickened portion 262b are connected to each other, the second body portion 262a and the second thickened portion 262b are sequentially distributed along the first direction X, the second body portion 262a is connected to the second wall 25, a thickness of the second body portion 262a is greater than or equal to the thickness of the second wall 25, and the thickness of the second thickened portion 262b is greater than the thickness of the second body portion 262a.

The first body portion 261a and the first thickened portion 261b are sequentially distributed along the first direction X, in the first direction X, one end of the first body portion 261a is connected to the first wall 24, and the other end of the first body portion 261a is connected to the first thickened portion 261b. The second body portion 262a and the second thickened portion 262b are sequentially distributed along the first direction X, in the first direction X, one end of the second body portion 262a is connected to the second wall 25, the other end of the second body portion 262a is connected to the second thickened portion 262b, and the first thickened portion 261b is welded to the second thickened portion 262b.

In some embodiments, the first body portion 261a has a first surface facing the interior of the battery cell 20, and the first thickened portion 261b protrudes from the first surface. Alternatively, the first body portion 261a has a second surface facing away from the interior of the battery cell 20, and the first thickened portion 261b protrudes from the second surface. Alternatively, the first body portion 261a has a first surface facing the interior of the battery cell 20 and a second surface facing away from the interior of the battery cell 20, and the first thickened portion 261b protrudes from the first surface and the second surface.

Optionally, the first thickened portion 261b protrudes from the first surface, and the first thickened portion 261b is flush with the second surface, reducing the risk of interference between the first thickened portion 261b and other components on the outer side of the battery cell 20.

In some embodiments, the second body portion 262a has a third surface facing the interior of the battery cell 20, and the second thickened portion 262b protrudes from the third surface. Alternatively, the second body portion 262a has a fourth surface facing away from the interior of the battery cell 20, and the second thickened portion 262b protrudes from the fourth surface. Alternatively, the second body portion 262a has a third surface facing the interior of the battery cell 20 and a fourth surface facing away from the interior of the battery cell 20, and the second thickened portion 262b protrudes from the third surface and the fourth surface.

Optionally, the second thickened portion 262b protrudes from the third surface, and the second thickened portion 262b is flush with the fourth surface, reducing the risk of interference between the second thickened portion 262b and other components on the outer side of the battery cell 20.

The thickness of the first body portion 261a is greater than or equal to the thickness of the first wall 24, and the thickness of the first thickened portion 261b is greater than the thickness of the first body portion 261a, so that the first sub-wall 261 has higher strength; the thickness of the second body portion 262a is greater than or equal to the thickness of the second wall 25, and the thickness of the second thickened portion 262b is greater than the thickness of the second body portion 262a, so that the second sub-wall 262 has higher strength.

In some embodiments, the thickness of the first body portion 261a and the thickness of the second body portion 262a may be the same or different. The thickness of the first thickened portion 261b and the thickness of the second thickened portion 262b may be the same or different.

In the above solution, the thickness of the first body portion 261a is not less than the thickness of the first wall 24, and the thickness of the first thickened portion 261b is greater than the thickness of the first body portion 261a, so that the first thickened portion 261b is thickened, which can enhance the strength of the first thickened portion 261b, while the thickness of the second body portion 262a is not less than the thickness of the second wall 25, and the thickness of the second thickened portion 262b is greater than the thickness of the second body portion 262a, so that the second thickened portion 262b is thickened, which can enhance the strength of the second thickened portion 262b, so as to facilitate higher strength after the first thickened portion 261b and the second thickened portion 262b are welded.

According to some embodiments of this application, along a third direction Z, a thickness at any position of the first thickened portion 261b is greater than the thickness of the first body portion 261a, a thickness at any position of the second thickened portion 262b is greater than the thickness of the second body portion 262a, and the first direction X, the second direction Y, and the third direction Z are perpendicular to each other.

Along the third direction Z, the thickness at any position of the first thickened portion 261b is greater than the thickness of the first body portion 261a, so that the strength of the first thickened portion 261b in the third direction Z is higher, facilitating processing and manufacturing.

Along the third direction Z, the thickness at any position of the second thickened portion 262b is greater than the thickness of the second body portion 262a, so that the strength of the second thickened portion 262b in the third direction Z is higher, facilitating processing and manufacturing.

In the above solution, the thickness at any position of the first thickened portion 261b in the third direction Z is larger, so that the first thickened portion 261b has higher strength, while the thickness at any position of the second thickened portion 262b in the third direction Z is larger, so that the second thickened portion 262b has higher strength, thereby making the housing body 211 have higher strength in the region near the welding position of the first sub-wall 261 and the second sub-wall 262.

Referring to FIG. 8, FIG. 8 is a schematic structural diagram of multiple first thickened portions and multiple second thickened portions according to some embodiments of this application. According to some embodiments of this application, there are multiple first thickened portions 261b, and along the third direction Z, the multiple first thickened portions 261b are spaced apart; there are multiple second thickened portions 262b, and along the third direction Z, the multiple second thickened portions 262b are spaced apart.

The multiple first thickened portions 261b are spaced apart in the third direction Z, a first transition portion 261c is connected between adjacent two first thickened portions 261b, and a thickness of the first transition portion 261c may be the same as the thickness of the first body portion 261a; alternatively, the first transition portion 261c is a variable-thickness structure, and a maximum thickness of the first transition portion 261c may be greater than the thickness of the first body portion 261a.

The multiple second thickened portions 262b are spaced apart in the third direction Z, a second transition portion 262c is connected between adjacent two second thickened portions 262b, and a thickness of the second transition portion 262c may be the same as the thickness of the second body portion 262a; alternatively, the first transition portion 261c is a variable-thickness structure, and a maximum thickness of the second transition portion 262c may be greater than the thickness of the second body portion 262a.

In the above solution, the multiple first thickened portions 261b are spaced apart along the third direction Z, so that while enhancing the strength of the first thickened portion 261b, the third wall 26 is lighter in weight, is made of less material, and has lower cost. The multiple second thickened portions 262b are spaced apart along the third direction Z, so that while enhancing the strength of the second thickened portion 262b, the third wall 26 is lighter in weight, is made of less material, and has lower cost.

Referring to FIG. 8, according to some embodiments of this application, along the third direction, a dimension of the first thickened portion 261b is greater than or equal to 0.1 times a dimension of the third wall 26, and the dimension of the first thickened portion 261b is less than or equal to 0.5 times the dimension of the third wall 26; and/or, along the third direction Z, a dimension of the second thickened portion 262b is greater than or equal to 0.1 times the dimension of the third wall 26, and the dimension of the second thickened portion 262b is less than or equal to 0.5 times the dimension of the third wall 26.

Along the third direction Z, the dimension of the third wall 26 is L, and the dimension of the first thickened portion 261b is L₁, satisfying 0.1*L ≤ L₁ ≤ 0.5*L; and/or along the third direction Z, the dimension of the third wall 26 is L, and the dimension of the second thickened portion 262b is L₂, satisfying 0.1*L ≤ L₂ ≤ 0.5*L.

In the above solution, the dimension of the first thickened portion 261b in the third direction Z satisfies the above relationship (0.1*L ≤ L₁ ≤ 0.5*L). When L₁ ≥ 0.1*L, the strength of the first thickened portion 261b can be enhanced. When L₁ ≤ 0.5*L, the first sub-wall 261 is lighter in weight, is made of less material, and has lower cost. The dimension of the second thickened portion 262b in the third direction Z satisfies the above relationship (0.1*L ≤ L₂ ≤ 0.5*L). When L₂ ≥ 0.1*L, the strength of the second thickened portion 262b can be enhanced. When L₂ ≤ 0.5*L, the second sub-wall 262 is lighter in weight, is made of less material, and has lower cost.

Optionally, L₁ may be, but is not limited to, 0.1*L, 0.15*L, 0.2*L, 0.25*L, 0.3*L, 0.35*L, 0.4*L, 0.45*L, and 0.5*L.

Optionally, L₂ may be, but is not limited to, 0.1*L, 0.15*L, 0.2*L, 0.25*L, 0.3*L, 0.35*L, 0.4*L, 0.45*L, and 0.5*L.

According to some embodiments of this application, 0.2*L ≤ L₁ ≤ 0.25*L, and/or, 0.2*L ≤ L₂ ≤ 0.25*L.

In the above solution, compared to L₁ < 0.2*L, when L₁ ≥ 0.2*L, the strength of the first thickened portion 261b is further enhanced; compared to L₁ > 0.25*L, when L₁ ≤ 0.25*L, the first sub-wall 261 is further lighter in weight, is made of less material, and has lower cost. Compared to L₂ < 0.2*L, when L₂ ≥ 0.2*L, the strength of the first thickened portion 261b is further enhanced; compared to L₂ > 0.25*L, when L₂ ≤ 0.25*L, the first sub-wall 261 is further lighter in weight, is made of less material, and has lower cost.

According to some embodiments of this application, along the third direction Z, the first thickened portion 261b extends from one end of the first sub-wall 261 to the other end, and the second thickened portion 262b extends from one end of the second sub-wall 262 to the other end.

In the above solution, the first thickened portion 261b is entirely thickened in the third direction Z of the first sub-wall 261, and the second thickened portion 262b is entirely thickened in the third direction Z of the second sub-wall 262, so that the region near the welding position of the first sub-wall 261 and the second sub-wall 262 has higher strength, reducing the risk of cracking near the welding position of the first sub-wall 261 and the second sub-wall 262.

Referring to FIG. 7, according to some embodiments of this application, along the first direction X, a dimension of the first thickened portion 261b is greater than 0, and the dimension of the first thickened portion 261b is less than or equal to 0.25 times a dimension of the third wall 26; and/or, along the first direction X, a dimension of the second thickened portion 262b is greater than 0, and the dimension of the second thickened portion 262b is less than or equal to 0.25 times the dimension of the third wall 26.

Along the first direction X, the dimension of the third wall 26 is W, and the dimension of the first thickened portion 261b is W₁, satisfying 0 < W₁ ≤ 0.25*W; and/or along the first direction X, the dimension of the third wall 26 is W, and the dimension of the second thickened portion 262b is W₂, satisfying 0 < W₂ ≤ 0.25*W.

In the above solution, the dimension of the first thickened portion 261b in the first direction X satisfies the above relationship (0 < W₁ ≤ 0.25*W). When the dimension of the first thickened portion 261b is greater than 0, the strength of the region near the welding position of the first sub-wall 261 and the second sub-wall 262 can be enhanced. When the dimension of the first thickened portion 261b is less than or equal to 0.25 times the dimension of the third wall 26, the first sub-wall 261 is lighter in weight, is made of less material, and has lower cost. The dimension of the second thickened portion 262b in the first direction X satisfies the above relationship (0 < W₂ ≤ 0.25*W). When the dimension of the second thickened portion 262b is greater than 0, the strength of the region near the welding position of the second sub-wall 262 and the first sub-wall 261 can be enhanced. When the dimension of the second thickened portion 262b is less than or equal to 0.25 times the dimension of the third wall 26, the second sub-wall 262 is lighter in weight, is made of less material, and has lower cost.

According to some embodiments of this application, 5 mm ≤ W₁ ≤ 10 mm, and/or, 5 mm ≤ W₂ ≤ 10 mm.

Optionally, W₁ may be, but is not limited to, 5 mm, 5.5 mm, 6 mm, 6.5 mm, 7 mm, 7.5 mm, 8 mm, 8.5 mm, 9 mm, 9.5 mm, and 10 mm.

Optionally, W₂ may be, but is not limited to, 5 mm, 5.5 mm, 6 mm, 6.5 mm, 7 mm, 7.5 mm, 8 mm, 8.5 mm, 9 mm, 9.5 mm, and 10 mm.

In the above solution, compared to W₁ < 5 mm, when W₁ ≥ 5 mm, the strength of the region near the welding position of the first sub-wall 261 and the second sub-wall 262 is further enhanced; compared to W₁ > 10 mm, when W₁ ≤ 10 mm, the first sub-wall 261 is further lighter in weight, is made of less material, and has lower cost. Compared to W₂ < 5 mm, when W₂ ≥ 5 mm, the strength of the region near the welding position of the second sub-wall 262 and the first sub-wall 261 is further enhanced; compared to W₂ > 10 mm, when W₂ ≤ 10 mm, the second sub-wall 262 is further lighter in weight, is made of less material, and has lower cost.

Referring to FIG. 7, according to some embodiments of this application, a thickness direction of the first thickened portion 261b is parallel to a thickness direction of the first sub-wall 261, a difference between a maximum thickness of the first thickened portion 261b and a thickness of the first body portion 261a is greater than or equal to 0.05 mm, and the difference between the maximum thickness of the first thickened portion 261b and the thickness of the first body portion 261a is less than or equal to the thickness of the first body portion 261a; and/or, a thickness direction of the second thickened portion 262b is parallel to a thickness direction of the second sub-wall 262, a difference between a maximum thickness of the second thickened portion 262b and a thickness of the second body portion 262a is greater than or equal to 0.05 mm, and the difference between the maximum thickness of the second thickened portion 262b and the thickness of the second body portion 262a is less than or equal to the thickness of the second body portion 262a.

A maximum thickness of the first thickened portion 261b is H₁, and a thickness of the first body portion 261a is H₂, satisfying 0.05 mm ≤ H₁ - H₂ ≤ H₂; and/or a maximum thickness of the second thickened portion 262b is H₃, and a thickness of the second body portion 262a is H₄, satisfying 0.05 mm ≤ H₃ - H₄ ≤ H₄.

In some embodiments, H₂ > 0.05 mm, and/or, H₄ > 0.05 mm.

In the above solution, the difference between the maximum thickness of the first thickened portion 261b and the thickness of the first body portion 261a satisfies the above relationship (0.05 mm ≤ H₁ - H₂ ≤ H₂). When the difference between the maximum thickness of the first thickened portion 261b and the thickness of the first body portion 261a is greater than or equal to 0.05 mm, the first thickened portion 261b has stronger strength. When the difference between the maximum thickness of the first thickened portion 261b and the thickness of the first body portion 261a is less than or equal to the thickness of the first body portion 261a, the first sub-wall 261 is lighter in weight and made of less material, and the first thickened portion 261b occupies less space in the thickness direction of the third wall 26. The difference between the maximum thickness of the second thickened portion 262b and the thickness of the second body portion 262a satisfies the above relationship (0.05 mm ≤ H₃ - H₄ ≤ H₄). When the difference between the maximum thickness of the second thickened portion 262b and the thickness of the second body portion 262a is greater than or equal to 0.05 mm, the second thickened portion 262b has stronger strength. When the difference between the maximum thickness of the second thickened portion 262b and the thickness of the second body portion 262a is less than or equal to the thickness of the second body portion 262a, the second sub-wall 262 is lighter in weight and made of less material, and the second thickened portion 262b occupies less space in the thickness direction of the third wall 26.

According to some embodiments of this application, 0.2 mm ≤ H₁ - H₂ ≤ 0.8*H₂, and/or, 0.2 mm ≤ H₃ - H₄ ≤ 0.8*H₄.

In the above solution, compared to H₁ - H₂ < 0.2 mm, when H₁ - H₂ ≥ 0.2 mm, the strength of the first thickened portion 261b is further enhanced; compared to H₁ - H₂ > 0.8*H₂, when H₁ - H₂ ≤ 0.8*H₂, the first sub-wall 261 is further lighter in weight and made of less material, and the first thickened portion 261b occupies less space in the thickness direction of the third wall 26. Compared to H₃ - H₄ < 0.2 mm, when H₃ - H₄ ≥ 0.2 mm, the strength of the second thickened portion 262b is further enhanced; compared to H₃ - H₄ > 0.8*H₂, when H₃ - H₄ ≤ 0.8*H₄, the second sub-wall 262 is further lighter in weight and made of less material, and the second thickened portion 262b occupies less space in the thickness direction of the third wall 26.

According to some embodiments of this application, the maximum thickness of the first thickened portion 261b is greater than or equal to 0.25 mm, and the maximum thickness of the first thickened portion 261b is less than or equal to 2.4 mm; and/or, the maximum thickness of the second thickened portion 262b is greater than or equal to 0.25 mm, and the maximum thickness of the second thickened portion 262b is less than or equal to 2.4 mm.

Optionally, H₁ may be, but is not limited to, 0.25 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, and 2.4 mm.

Optionally, H₃ may be, but is not limited to, 0.25 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, and 2.4 mm.

In the above solution, the maximum thickness of the first thickened portion 261b satisfies the above relationship (0.25 mm ≤ H₁ ≤ 2.4 mm). When the maximum thickness of the first thickened portion 261b is greater than or equal to 0.25 mm, the first thickened portion 261b has higher strength. When the maximum thickness of the first thickened portion 261b is less than or equal to 2.4 mm, the first thickened portion 261b occupies less space in the thickness direction of the third wall 26, reducing the risk of interference between the first thickened portion 261b and other components. The maximum thickness of the second thickened portion 262b satisfies the above relationship (0.25 mm ≤ H₃ ≤ 2.4 mm). When the maximum thickness of the second thickened portion 262b is greater than or equal to 0.25 mm, the second thickened portion 262b has higher strength. When the maximum thickness of the second thickened portion 262b is less than or equal to 2.4 mm, the second thickened portion 262b occupies less space in the thickness direction of the third wall 26, reducing the risk of interference between the second thickened portion 262b and other components.

According to some embodiments of this application, 0.8 mm ≤ H₁ ≤ 1.8 mm, and/or, 0.8 mm ≤ H₃ ≤ 1.8 mm.

Optionally, H₁ may be, but is not limited to, 0.8 mm, 0.85 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, and 1.8 mm.

Optionally, H₃ may be, but is not limited to, 0.8 mm, 0.85 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, and 1.8 mm.

In the above solution, compared to H₁ < 0.8 mm, when H₁ ≥ 0.8 mm, the thickness of the first thickened portion 261b is further enhanced; compared to H₁ > 1.8 mm, when H₁ ≤ 1.8 mm, the first thickened portion 261b further occupies less space in the thickness direction of the third wall 26, reducing the risk of interference between the first thickened portion 261b and other components. Compared to H₃ < 0.8 mm, when H₃ ≥ 0.8 mm, the thickness of the second thickened portion 262b is further enhanced; compared to H₃ > 1.8 mm, when H₃ ≤ 1.8 mm, the second thickened portion 262b further occupies less space in the thickness direction of the third wall 26, reducing the risk of interference between the second thickened portion 262b and other components.

According to some embodiments of this application, 0.2 mm ≤ H₂ ≤ 1.2 mm.

In the above solution, the thickness of the first body portion 261a satisfies the above relationship, the first sub-wall 261 has a larger thickness, and the first sub-wall 261 occupies less space in the thickness direction of the third wall 26.

Optionally, 0.6 mm ≤ H₂ ≤ 1 mm.

Optionally, H₂ may be, but is not limited to, 0.2 mm, 0.3 mm, 0.4 mm, 0.5 mm, 0.6 mm, 0.7 mm, 0.8 mm, 0.9 mm, 1 mm, 1.1 mm, and 1.2 mm.

According to some embodiments of this application, 0.2 mm ≤ H₄ ≤ 1.2 mm.

In the above solution, the thickness of the second body portion 262a satisfies the above relationship, the second sub-wall 262 has a larger thickness, and the second sub-wall 262 occupies less space in the thickness direction of the third wall 26.

Optionally, 0.6 mm ≤ H₄ ≤ 1 mm.

Optionally, H₄ may be, but is not limited to, 0.2 mm, 0.3 mm, 0.4 mm, 0.5 mm, 0.6 mm, 0.7 mm, 0.8 mm, 0.9 mm, 1 mm, 1.1 mm, and 1.2 mm.

Referring to FIG. 4 and FIG. 5, according to some embodiments of this application, the housing body 211 further includes a fourth wall 27, the third wall 26 and the fourth wall 27 are oppositely arranged in the second direction Y, two ends of the fourth wall 27 are respectively connected to the first wall 24 and the second wall 25, and the first sub-wall 261, the first wall 24, the fourth wall 27, the second wall 25, and the second sub-wall 262 are integrally formed.

In the above solution, the fourth wall 27 and the third wall 26 are oppositely arranged in the second direction Y, and the first wall 24, the fourth wall 27, the second wall 25, and the third wall 26 enclose an accommodating cavity to accommodate the electrode assembly. The first sub-wall 261, the first wall 24, the fourth wall 27, the second wall 25, and the second sub-wall 262 are integrally formed, so that the overall strength of the housing body 211 is higher, and the processing and manufacturing difficulty is lower.

In some embodiments, during processing and manufacturing of the housing body 211, it may be formed by bending a single plate, and after the approximate outline of the housing body 211 is bent, one end of the first sub-wall 261 away from the first wall 24 is welded to one end of the second sub-wall 262 away from the second wall 25.

Referring to FIG. 4 and FIG. 5, according to some embodiments of this application, an area of an outer surface of the first wall 24 is greater than an area of an outer surface of the third wall 26 and greater than an area of an outer surface of the fourth wall 27, and an area of an outer surface of the second wall 25 is greater than the area of the outer surface of the third wall 26 and greater than the area of the outer surface of the fourth wall 27.

The outer surface of the first wall 24 refers to a surface of the first wall 24 facing away from the interior of the battery cell 20. Similarly, the outer surface of the second wall 25 refers to a surface of the second wall 25 facing away from the interior of the battery cell 20. The outer surface of the third wall 26 refers to a surface of the third wall 26 facing away from the interior of the battery cell 20. The outer surface of the fourth wall 27 refers to a surface of the fourth wall 27 facing away from the interior of the battery cell 20.

In the above solution, the first wall 24 and the second wall 25 can be larger faces of the housing body 211, and the first wall 24 and the second wall 25 can be of an integral structure, so that the overall strength of the first wall 24 and the overall strength of the second wall 25 are both higher, and the third wall 26 can be a narrower face of the housing body 211, facilitating the connection of the first sub-wall 261 and the second sub-wall 262.

Referring to FIG. 3, according to some embodiments of this application, the housing body 211 has two openings opposite along the third direction Z, the housing 21 further includes two end covers 212, the two end covers 212 respectively close the two openings, and the third direction Z, the second direction Y, and the first direction X are perpendicular to each other.

The two openings correspond one-to-one with the two end covers 212, and each opening is closed by a corresponding end cover 212.

In some embodiments, the battery cell 20 further includes a positive electrode terminal and a negative electrode terminal, the positive electrode terminal may be provided on one end cover 212, and the negative electrode terminal may be provided on the other end cover 212. A positive electrode tab of the electrode assembly is electrically connected to the positive electrode terminal, and a negative electrode tab of the electrode assembly is electrically connected to the negative electrode terminal.

In the above solution, the two openings are provided to facilitate the assembly of the electrode assembly with the housing body 211, and at the same time, the positive electrode tab and the negative electrode tab of the electrode assembly can extend from both ends in the third direction Z, facilitating the output or input of electrical energy from both ends of the battery cell 20 in the third direction Z.

According to some embodiments of this application, the embodiments of this application further provide a battery 100, which includes the battery cell 20 provided in any of the above embodiments.

According to some embodiments of this application, the embodiments of this application further provide an electric device, which includes the battery cell 20 or the battery 100 provided in any of the above embodiments.

The electric device may be any of the above apparatuses or systems using the battery cell 20 or the battery 100. The battery cell 20 or the battery 100 is used to provide electrical energy for the electric device.

According to some embodiments of this application, the embodiments of this application further provide an energy storage apparatus, which includes the battery cell 20 or the battery 100 provided in any of the above embodiments.

According to some embodiments of this application, referring to FIG. 3 to FIG. 8, the embodiments of this application provide a battery cell 20, where the battery cell 20 is in a rectangular parallelepiped shape. The battery cell 20 includes a housing 21, an electrode assembly 22, and electrode terminals 23. The housing 21 includes a housing body 211 and end covers 212, the housing body 211 has two openings opposite along the third direction Z, the number of the end covers 212 is two, and the two end covers 212 respectively close the two openings. The electrode assembly 22 is disposed in the housing body 211, the electrode terminals 23 are disposed on the end covers 212, and tabs of the electrode assembly 22 are electrically connected to the electrode terminals 23. The housing body 211 includes a first wall 24, a second wall 25, a third wall 26, and a fourth wall 27, the first wall 24 and the second wall 25 are oppositely arranged along the first direction X, and the third wall 26 and the fourth wall 27 are oppositely arranged along the second direction Y. The third wall 26 includes a first sub-wall 261 and a second sub-wall 262 sequentially distributed along the first direction X, one end of the first sub-wall 261 is connected to the first wall 24, one end of the second sub-wall 262 is connected to the second wall 25, and the first sub-wall 261 and the second sub-wall 262 are welded. The first sub-wall 261, the first wall 24, and the fourth wall 27 are integrally formed, and the second sub-wall 262, the second wall 25, and the fourth wall 27 are integrally formed. Along the thickness direction of the third wall 26, the first sub-wall 261 and the second sub-wall 262 do not overlap. The first sub-wall 261 includes a first body portion 261a and a first thickened portion 261b sequentially distributed along the first direction X, one end of the first body portion 261a is connected to the first wall 24, the second sub-wall 262 includes a second body portion 262a and a second thickened portion 262b sequentially distributed along the first direction X, and one end of the second body portion 262a is connected to the second wall 25. The first thickened portion 261b extends along the third direction Z, the second thickened portion 262b extends along the third direction Z, and the first thickened portion 261b is welded to the second thickened portion 262b.

In some embodiments, the first thickened portion 261b extends from one end of the first sub-wall 261 to the other end in the third direction Z, and the first thickened portion 261b is entirely thickened in the third direction Z. The second thickened portion 262b extends from one end of the second sub-wall 262 to the other end in the third direction Z, and the second thickened portion 262b is entirely thickened in the third direction Z.

In some embodiments, there are multiple first thickened portions 261b, and the multiple first thickened portions 261b are spaced apart along the third direction Z. There are multiple second thickened portions 262b, and the multiple second thickened portions 262b are spaced apart along the third direction Z.

According to the battery cell 20 of the embodiments of this application, the housing body 211 is formed by bending a single plate, a maximum thickness of the first thickened portion 261b is greater than a thickness of the first wall 24, a maximum thickness of the second thickened portion 262b is greater than a thickness of the second wall 25, and the first thickened portion 261b and the second thickened portion 262b are thickened, so that the strength of the housing body 211 is higher. This can reduce the risk of cracking in the region of the housing body 211 near the welding position, so that the battery cell 20 has longer service life and higher reliability.

Although this application has been described with reference to preferred embodiments, various improvements can be made thereto and components therein can be replaced with equivalents without departing from the scope of this application. In particular, as long as there is no structural conflict, the technical features mentioned in the various embodiments can be combined in any manner. This application is not limited to the specific embodiments disclosed herein, but includes all technical solutions falling within the scope of the claims.

## Claims

1. A battery cell, comprising:
a housing, comprises a housing body, wherein the housing body comprises a first wall, a second wall, and a third wall, the first wall and the second wall are oppositely arranged in a first direction, the third wall comprises a first sub-wall and a second sub-wall sequentially distributed along the first direction, the first sub-wall and the second sub-wall are respectively connected to same-side ends of the first wall and the second wall in a second direction, and the first direction is perpendicular to the second direction;
wherein the first sub-wall comprises a first thickened portion, the second sub-wall comprises a second thickened portion, a thickness of the first thickened portion is greater than a thickness of the first wall, a thickness of the second thickened portion is greater than a thickness of the second wall, and the first thickened portion and the second thickened portion are welded.

2. The battery cell according to claim 1, wherein along the second direction, the first sub-wall and the second sub-wall do not overlap.

3. The battery cell according to claim 1 or 2, wherein the first sub-wall further comprises a first body portion, the first body portion and the first thickened portion are connected to each other, the first body portion and the first thickened portion are sequentially distributed along the first direction, the first body portion is connected to the first wall, a thickness of the first body portion is greater than or equal to the thickness of the first wall, and the thickness of the first thickened portion is greater than the thickness of the first body portion; and
the second sub-wall further comprises a second body portion, the second body portion and the second thickened portion are connected to each other, the second body portion and the second thickened portion are sequentially distributed along the first direction, the second body portion is connected to the second wall, a thickness of the second body portion is greater than or equal to the thickness of the second wall, and the thickness of the second thickened portion is greater than the thickness of the second body portion.

4. The battery cell according to claim 3, wherein along a third direction, a thickness at any position of the first thickened portion is greater than the thickness of the first body portion, a thickness at any position of the second thickened portion is greater than the thickness of the second body portion, and the first direction, the second direction, and the third direction are perpendicular to each other.

5. The battery cell according to claim 4, wherein there are multiple first thickened portions, and along the third direction, the multiple first thickened portions are spaced apart; and
there are multiple second thickened portions, and along the third direction, the multiple second thickened portions are spaced apart.

6. The battery cell according to claim 4, wherein along the third direction, the first thickened portion extends from one end of the first sub-wall to the other end, and the second thickened portion extends from one end of the second sub-wall to the other end.

7. The battery cell according to any one of claims 3 to 6, wherein along the first direction, a dimension of the first thickened portion is greater than 0, and the dimension of the first thickened portion is less than or equal to 0.25 times a dimension of the third wall; and/or
along the first direction, a dimension of the second thickened portion is greater than 0, and the dimension of the second thickened portion is less than or equal to 0.25 times the dimension of the third wall.

8. The battery cell according to any one of claims 3 to 6, wherein a thickness direction of the first thickened portion is parallel to a thickness direction of the first sub-wall, a difference between a maximum thickness of the first thickened portion and the thickness of the first body portion is greater than or equal to 0.05 mm, and the difference between the maximum thickness of the first thickened portion and the thickness of the first body portion is less than or equal to the thickness of the first body portion; and/or
a thickness direction of the second thickened portion is parallel to a thickness direction of the second sub-wall, a difference between a maximum thickness of the second thickened portion and the thickness of the second body portion is greater than or equal to 0.05 mm, and the difference between the maximum thickness of the second thickened portion and the thickness of the second body portion is less than or equal to the thickness of the second body portion.

9. The battery cell according to claim 8, wherein the maximum thickness of the first thickened portion is greater than or equal to 0.25 mm, and the maximum thickness of the first thickened portion is less than or equal to 2.4 mm; and/or, the maximum thickness of the second thickened portion is greater than or equal to 0.25 mm, and the maximum thickness of the second thickened portion is less than or equal to 2.4 mm.

10. The battery cell according to any one of claims 1 to 9, wherein the housing body further comprises a fourth wall, the third wall and the fourth wall are oppositely arranged in the second direction, two ends of the fourth wall are respectively connected to the first wall and the second wall, and the first sub-wall, the first wall, the fourth wall, the second wall, and the second sub-wall are integrally formed.

11. The battery cell according to claim 10, wherein an area of an outer surface of the first wall is greater than an area of an outer surface of the third wall and greater than an area of an outer surface of the fourth wall, and an area of an outer surface of the second wall is greater than the area of the outer surface of the third wall and greater than the area of the outer surface of the fourth wall.

12. The battery cell according to any one of claims 1 to 11, wherein the housing body has two openings opposite along a third direction, the housing further comprises two end covers, the two end covers respectively close the two openings, and the third direction, the second direction, and the first direction are perpendicular to each other.

13. A battery, comprising the battery cell according to any one of claims 1 to 12.

14. An electric device, comprising the battery cell according to any one of claims 1 to 12 or the battery according to claim 13.

15. An energy storage apparatus, comprising the battery cell according to any one of claims 1 to 12 or the battery according to claim 13.
